# EUROPÄISCHE PATENTSCHRIFT

(11) **EP 3 657 993 B1**
(45) Veröffentlichungstag und Bekanntmachung des Hinweises auf die Patenterteilung: **07.07.2021**
(21) Anmeldenummer: 18749749.0
(22) Anmeldetag: 26.07.2018
(51) Int. Cl.: A47F 5/00, A47B 96/02, G06Q 10/08, A47F 10/02

(54) **LAGEREINSATZ FÜR LAGERVORRICHTUNG MIT AN UNTERSEITE ANBRINGBARER SENSORLEISTE ZUM OPTISCHEN ERFASSEN VON AN OBERSEITE LAGERBAREM LAGERGUT**
STORAGE SHELF FOR STORAGE DEVICE WITH A SENSOR STRIP THAT CAN BE APPLIED TO THE LOWER SIDE FOR OPTICALLY DETECTING STOCK THAT CAN BE STORED ON THE UPPER SIDE
PALIER POUR DISPOSITIF DE STOCKAGE AVEC UNE BARRE DE CAPTEURS POUVANT ÊTRE DISPOSÉE SUR LA FACE INFÉRIEURE POUR LA DÉTECTION OPTIQUE D'ARTICLES À STOCKER SUR LA FACE SUPÉRIEURE

(30) Priorität: 28.07.2017 DE 102017117177
(43) Veröffentlichungstag der Anmeldung: 03.06.2020
(73) Patentinhaber: Adolf Würth GmbH & Co. KG, 74653 Künzelsau (DE); Würth International AG, 7000 Chur (CH)
(72) Erfinder: HOHL, Wolfgang, 74653 Künzelsau (DE); STARKE, Johannes, 74248 Ellhofen (DE); KOCH, Simon, 74677 Dörzbach (DE)
(74) Vertreter: Dilg, Haeusler, Schindelmann Patentanwaltsgesellschaft mbH
(86) Internationale Anmeldenummer: PCT/EP2018/070281
(87) Internationale Veröffentlichungsnummer: WO 2019/020743

(56) Entgegenhaltungen:
- WO-A1-2017/084649
- DE-A1- 19 714 799
- US-A1- 2014 201 042

## Beschreibung

Die Erfindung betrifft einen Lagereinsatz, eine Lagervorrichtung, ein Lagerverwaltungssystem und eine Verwendung.

Die logistische Handhabung großer Warenlager stellt herkömmlich besonders dann eine große Herausforderung dar, wenn die Warenmengen groß sind, die Warenarten stark diversifiziert sind, die Waren und der Warenbestand einem häufigen Wechsel unterworfen sind und die einzelnen Lagerorte der Waren räumlich weit auseinander liegen bzw. auch die Lagerorte häufig wechseln.

Solche Warenbestände werden herkömmlich rechnergestützt verwaltet. Dezentral kontrollieren Personen die Warenbestände und bestellen bei Bedarf lokal Waren nach. Dieses Verfahren ist träge, zeitintensiv, arbeitsintensiv und erfordert durch die lokale Bearbeitung einzelner Warenbestände viele dezentrale Ressourcen.

Aus der WO 2017/084649 ist ein Lagervorrichtung mit Regalböden bekannt, denen optische Sensoren zugeordnet sind, um die Befüllung bzw. den Füllstand der Regalböden mit Gut zu erfassen. WO 2017/084649 offenbart eine Vorrichtung zur Lagerung von Stückgut mit mindestens einem Boden mit einer Oberseite, auf der das Stückgut in einem Überwachungsraum lagerbar ist, und mit einer Unterseite und mit Öffnungen, die von der Oberseite zu der Unterseite verlaufen, sowie Signalgebern mit zugeordneten Signalempfängern, wobei mindestens eine Sorte in den Öffnungen an der Unterseite angeordnet ist und ein Signal der Signalgeber durch die Signalempfänger detektierbar ist, sowie einer Steuerelektronik mit Steuersystem, die die Signalgeber und Signalempfänger mit Strom versorgen sowie Signale der Signalempfänger verarbeiten sowie sie identifizieren, um einen Belegzustand des Überwachungsraums mit Stückgut an Hand des Vorliegens eines Signals an dem jeweiligen Signalempfänger zu identifizieren.

DE 197 14 799 A1 offenbart eine mit Detektoren versehene Lagerfläche. Die Lagerfläche kann als Regalbrett ausgebildet sein. Die Detektoren können als Drucksensoren, Gewichtssensoren, mechanische Schalter, induktive oder kapazitive Sensoren ausgebildet sein. Die zu den Detektoren führenden Signalleitungen und die zugehörigen Detektoren sind auf Leiterplattenstreifen angeordnet. Eine Anbindung der Leiterstreifen an einen Signalspeicher erfolgt über eine am Rand der Lagerfläche angeordnete Buchse und einen in die Buchse einsteckbaren Stecker.

US 2005/0168345 A1 und US 2007/0016494 A1 offenbaren jeweils eine Lagerplatte mit Sensoren.

Es ist eine Aufgabe der vorliegenden Erfindung, eine Überwachung eines Lagerbestands mit geringem Aufwand und hoher Präzision zu ermöglichen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Lagereinsatz (insbesondere ausgebildet zum Einsetzen in eine Lagervorrichtung) geschaffen, wobei der Lagereinsatz einen (insbesondere flächigen) Lagerkörper mit einer Oberseite zum Aufnehmen von Lagergut, mit einer Unterseite mit Aufnahmestrukturen in einem Aufnahmebereich zum Aufnehmen einer Sensorleiste, und mit mindestens einem optisch transparenten Abschnitt zwischen dem Aufnahmebereich und der Oberseite, und die Sensorleiste aufweist, die ausgebildet ist, mittels der Aufnahmestrukturen in dem Aufnahmebereich (insbesondere reversibel, abnehmbar oder austauschbar) aufgenommen zu werden und mindestens ein Sensorelement im Bereich des mindestens einen optisch transparenten Abschnitts aufweist.

Gemäß einem anderen Ausführungsbeispiel ist eine Lagervorrichtung bereitgestellt, die Befestigungsstrukturen zum Befestigen von mindestens einem Lagereinsatz (insbesondere mehrere Lagereinsätze) sowie mindestens einen Lagereinsatz (insbesondere mehrere Lagereinsätze) mit den oben beschriebenen Merkmalen aufweist, der an den Befestigungsstrukturen befestigt oder befestigbar ist.

Gemäß noch einem anderen Ausführungsbeispiel der vorliegenden Erfindung ist ein Lagerverwaltungssystem geschaffen, das eine Mehrzahl von Lagervorrichtungen mit den oben beschriebenen Merkmalen und eine Verwaltungseinrichtung aufweist, die eingerichtet ist, basierend auf Sensorsignalen der Sensorelemente (insbesondere basierend auf der Verwaltungseinrichtung übermittelten Sensorsignalen der Sensoren oder bereits ausgewerteten Sensorergebnissen) einen Bestand von Lagergut auf den Lagereinsätzen zu verwalten.

Gemäß noch einem anderen Ausführungsbeispiel der vorliegenden Erfindung wird ein Lagereinsatz mit den oben beschriebenen Merkmalen oder eine Lagervorrichtung mit den oben beschriebenen Merkmalen oder ein Lagerverwaltungssystem mit den oben beschriebenen Merkmalen zum Verwalten eines Bestandes von Lagergut auf der Oberseite des Lagereinsatzes verwendet.

Im Rahmen dieser Anmeldung kann unter dem Begriff "Lagereinsatz" insbesondere ein modulares flächiges Bauteil verstanden, das zum Aufnehmen von Lagergut dienen kann, wenn der Lagereinsatz an Befestigungsstrukturen einer Lagervorrichtung (zum Beispiel eines Regals oder eines Schranks) montiert bzw. eingesetzt ist. Zum Beispiel kann ein solcher Lagereinsatz ein Fach eines Regals oder Schranks sein.

Im Rahmen dieser Anmeldung kann unter dem Begriff "Lagerkörper" insbesondere eine flächige Struktur, zum Beispiel eine Platte oder ein geformtes Blech, verstanden werden, welche die strukturelle Basis eines Lagereinsatzes bildet. An und/oder in dem Lagerkörper können Merkmale vorgesehen oder Strukturen ausgebildet werden, um die über die bloße Aufnahme von Lagergütern hinausgehende Funktionalität eines Lagereinsatzes, insbesondere im Zusammenhang mit der sensorischen Erfassung von Lagergütern, zu schaffen.

Im Rahmen dieser Anmeldung kann unter dem Begriff "Sensorleiste" insbesondere ein langgestreckter Körper verstanden werden, an und/oder in dem zumindest ein Teil der Sensorfunktionalität eines Lagereinsatzes implementiert ist. Eine Sensorleiste kann eine streifenförmige Gestalt mit einer Länge haben, die mindestens das Dreifache, insbesondere mindestens das Fünffache, weiter insbesondere mindestens das Zehnfache einer Breite der Sensorleiste betragen kann. Insbesondere kann eine Sensorleiste ein oder mehrere Sensorelemente tragen, das oder die zum Erfassen von Sensordaten ausgebildet ist oder sind.

Im Rahmen dieser Anmeldung kann unter dem Begriff "Lagervorrichtung" insbesondere ein kastenartiges Gestell mit einem oder vorzugsweise mehreren Lagereinsätzen verstanden werden, das zum Aufstellen, Ablegen, Aufbewahren, etc. von Lagergut ausgebildet ist. Ein solches Gestell kann auf dem Boden stehen und/oder an einer Wand befestigt sein. Zum Beispiel kann die Lagervorrichtung als Lagerregal oder Lagerschrank ausgebildet sein. Wenn ein solches Gestell zumindest teilweise offen ist, kann es zum Beispiel als Regal ausgebildet sein. Bei einer Ausgestaltung als Schrank kann das Gestell mit Türen versehen sein, die optional abschließbar sein können.

Im Rahmen dieser Anmeldung kann unter dem Begriff "Lagerverwaltungssystem" insbesondere eine Anordnung von Lagervorrichtungen verstanden werden, die ganz oder teilweise mit Lagergütern befüllt sein können oder unbefüllt sein können und vom System verwaltet werden. Der Befüllungsgrad kann lagergutspezifisch bzw. lagerplatzspezifisch sensorisch erfasst werden. Eine zum Beispiel als Prozessor ausgebildete Verwaltungseinrichtung kann auf Basis der sensorisch erkannten Befüllungsgrade der Lagervorrichtungen mit den verschiedenen Typen von Lagergütern selbsttätig eine Nachbestellung vornehmen oder auslösen, zum Beispiel wenn ein Restbestand eines jeweiligen Lagerguts einen vorgebbaren Schwellenwert unterschritten hat.

Im Rahmen dieser Anmeldung kann unter "Lagergut" insbesondere ein handelbarer physischer Körper verstanden, der gemeinsam mit vielen anderen Warenelementen einen Warenbestand bildet, der einem fortlaufenden Wandel unterworfen sein kann. Beispiele für solche Lagergüter oder Warenelemente sind insbesondere technische Gegenstände oder Komponenten, wie zum Beispiel Werkzeugkomponenten (zum Beispiel Hammer, Schraubendreher, etc.) oder Verbrauchskomponenten (zum Beispiel Schrauben, Nägel, Dübel, etc.). Beispiele für Art bzw. Typ eines Lagerguts bzw. eines Warenelements sind Kofferinhalte, Maschinenkomponenten, der Inhalt eines Maschinenkoffers, Werkzeugeinlagen, Kanister, Dosen, Flaschen, Kartuschen, Tuben und/oder Schubladeninhalte. Lagergüter, zum Beispiel Schüttgut, können auch in Lagerboxen oder Kartons gelagert sein.

Im Rahmen dieser Anmeldung wird unter dem Begriff "Sensorelement" insbesondere eine Einrichtung zum Erfassen des Vorhandenseins oder Fehlens und/oder des Füllstands von einem oder mehreren Lagergütern in und/oder an einem bestimmten Lagereinsatz oder in und/oder an einer bestimmten Position an der Oberseite eines Lagerkörpers verstanden. Ein jeweiliges Sensorelement kann zum Erfassen mindestens eines Parameters eingerichtet sein, der für das Vorhandensein oder Fehlen oder für den Füllstand von einem oder mehreren Lagergütern an einer zugeordneten Position eines zugeordneten Lagereinsatzes indikativ ist. Hierfür kann das jeweilige Sensorelement im Bereich des optisch transparenten Abschnitts angeordnet sein und das dortige Vorhandensein oder Nichtvorhandensein von Lagergut dadurch vorzugsweise optisch erfassen, dass der optisch transparente Abschnitt von Lagergut bedeckt oder nicht bedeckt ist.

Gemäß einem exemplarischen Ausführungsbeispiel der Erfindung ist ein Lagereinsatz (zum Beispiel ein Fach) für eine Lagervorrichtung (zum Beispiel ein Regal) geschaffen, der an einer Oberseite eines Lagerkörpers ein Aufnahmevolumen zum Aufnehmen von Lagergut aufweist. Das Lagergut bedeckt, wenn es vorhanden ist, einen zugehörigen optisch transparenten Abschnitt (zum Beispiel ein Durchgangsloch) in dem Lagerkörper. An der Unterseite des Lagerkörpers ist eine Sensorleiste mit einem oder vorzugsweise mehreren Sensorelementen vorgesehen, deren Positionen zu den Positionen der vorzugsweise mehreren optisch transparenten Abschnitte korrespondieren. Durch ein bloßes Einführen einer solchen Sensorleiste, vorzugsweise mehrerer Sensorleisten, in zugeordnete Aufnahmebereiche an der Unterseite des Lagerkörpers können die an der Sensorleiste vorgesehenen Sensorelemente, geführt durch Aufnahmestrukturen an der Unterseite des Lagerkörpers, in Wirkverbindung mit den optisch transparenten Abschnitten gebracht werden. Das Aufnahmevolumen für die Lagergüter wird durch dieses Anbringen der Sensorik daher nicht gestört. Mit dem technisch leichten Ausbilden von Aufnahmestrukturen an der Unterseite des Lagerkörpers kann für einen Benutzer intuitiv ermöglicht werden, die Sensorleisten ohne die Gefahr von Bedienungsfehlern und präzise an den vorgesehenen Positionen zu montieren. Dadurch kann mit einfachen Mitteln ein vollautomatisches und fehlerrobustes Überwachungssystem selbst für große und stark diversifizierte Bestände von Lagergütern bereitgestellt werden, das von einem Benutzer auch ohne spezielle Fachkenntnisse fehlerfrei bedient werden kann.

Im Weiteren werden zusätzliche Ausführungsbeispiele des Lagereinsatzes, der Lagervorrichtung, des Lagerverwaltungssystems und der Verwendung beschrieben.

Der Lagerkörper ist als Lagerplatte, insbesondere als Lagerblech, weiter insbesondere als gestanztes und mindestens abschnittsweise gebogenes Lagerblech, ausgebildet. Der Lagerkörper kann also als flächiges Bauteil ausgebildet sein, was sowohl hinsichtlich der Anordnung einer großen Menge von Lagergütern an seiner Oberseite als auch hinsichtlich der Anordnung einer großen Anzahl von Sensorleisten an seiner Unterseite von Vorteil ist. Zum Beispiel kann eine solche Lagerplatte aus einem metallischen Blech gefertigt werden, das lediglich zum Ausbilden der Aufnahmestrukturen und der optisch transparenten Abschnitte gestanzt und zum Befestigen an den Befestigungsstrukturen der Lagervorrichtung sowie zum Formgestalten der Aufnahmestrukturen gebogen zu werden braucht. Weitere Fertigungsschritte sind entbehrlich. Auf diese Weise kann mit einfachen Mitteln ein leistungsfähiger Lagereinsatz gefertigt werden.

Gemäß einem Ausführungsbeispiel kann an der Oberseite des Lagerkörpers ein Aufnahmevolumen zum Aufnehmen der Lagergüter abgegrenzt sein - insbesondere mittels (vorzugsweise vertikalen) Begrenzungswänden. Genauer gesagt kann die Oberseite des Lagerkörpers in eine Mehrzahl von Lagerbereichen aufgeteilt werden, wobei jedem Lagerbereich ein spezieller Typ von Lagergütern, ein oder vorzugsweise mehrere optisch transparente Abschnitte sowie eine korrespondierende Sensorleiste zugeordnet sein kann. Auf diese Weise kann eine Verwaltungseinrichtung eines Lagerverwaltungssystems einer spezifischen Sensorleiste eines Lagereinsatzes einen zugeordneten Typ von Lagergütern zuweisen. Sensorsignale der Sensorelemente dieser Sensorleiste sind dann für die Verwaltungseinrichtung direkt indikativ für einen Restbestand dieses spezifisch zugeordneten Typs von Lagergütern (zum Beispiel M8 Schrauben) an dem Lagerplatz des Lagerkörpers.

Gemäß einem Ausführungsbeispiel können die Aufnahmestrukturen zum, insbesondere schubladenartigen, Einschieben oder Herausziehen der Sensorleiste ausgebildet sein. Die Aufnahmestrukturen bilden dann eine Führung für das schubladenartige Montieren einer jeweiligen Sensorleiste im zugehörigen Aufnahmebereich mit Aufnahmestrukturen. Zu diesem Zweck können die Aufnahmestrukturen linksseitig und rechtsseitig einer einzuschiebenden Sensorleiste die Sensorleiste halten und ihre Einführrichtung definieren.

Gemäß einem Ausführungsbeispiel können die Aufnahmestrukturen einen Anschlag zum Definieren einer Endposition der aufgenommenen Sensorleiste aufweisen. Ein solcher Anschlag kann als Überstand an der Unterseite des Lagerkörpers ausgebildet werden. Wenn bei Einschieben der Sensorleiste entlang der Aufnahmestrukturen eine Vorderseite der Sensorleiste an diesen Überstand anstößt, ist ein fortgesetztes Einschieben der Sensorleiste entlang den Aufnahmestrukturen mechanisch verunmöglicht. Das Anstoßen der Sensorleiste an dem Anschlag gibt einem Benutzer auch eine haptische Rückmeldung, die den erfolgreichen Abschluss eines Einführvorgangs anzeigt. Das Ereignis des Anstoßens stellt somit auch eine fehlerrobuste Einführung der Sensorleiste bis zu einer solchen Position sicher. Schlägt die Vorderseite der Sensorleiste an den Anschlag an, sind automatisch die Sensorelemente dieser Sensorleiste korrekt zu den optisch transparenten Abschnitten ausgerichtet, was eine fehlerfreie und präzise Sensorik garantiert.

Gemäß einem Ausführungsbeispiel können die Aufnahmestrukturen als Ausklinkungen (insbesondere als L-förmige und/oder V-förmige Ausklinkungen) in dem Lagerkörper ausgebildet sein. Eine solche Ausklinkung kann in einem plattenartigen Lagerkörper (zum Beispiel einem Metallblech) durch Bilden einer zum Beispiel L-förmigen oder V-förmigen Aussparung und durch ein nachfolgendes Herausdrücken einer durch die Aussparung definierten Zunge des Lagerkörpers hergestellt werden. Eine Ausklinkung kann ein abschnittsweise herausgelöster und abgewinkelter Biegeabschnitt eines als gestanztes und gebogenes Blech ausgebildeten Lagerkörpers sein. Solche aus der Ebene des Lagerkörpers herausgedrückten Zungen können dann als Führungsstrukturen bzw. Anschlag für die Sensorleiste fungieren. Auf diese Weise können mit einfachen Mitteln und dennoch sehr präzise Aufnahmestrukturen für die Sensorleiste geschaffen werden, die integral (insbesondere einstückig bzw. einstoffig) mit dem Lagerkörper gebildet sein können.

Gemäß einem Ausführungsbeispiel kann der mindestens eine optisch transparente Abschnitt als Durchgangsloch in dem Lagerkörper ausgebildet sein. Wenn ein optisch empfindliches Sensorelement der Sensorleiste direkt unterhalb eines Durchgangslochs in dem Lagerkörper angeordnet ist, ist ein von diesem Sensorelement detektierbares optisches Signal davon abhängig, ob dieses Durchgangsloch von Lagergut bedeckt ist oder von Lagergut frei ist. Das Ausbilden des optisch transparenten Abschnitts durch ein bloßes Durchgangsloch in dem Lagerkörper stellt im Zusammenwirken mit dem dazu fluchtenden Sensorelement der Sensorleiste ein einfaches und fehlerrobustes optisches Detektionssystem bereit, das einen Warenbestand oberhalb des Durchgangslochs zuverlässig erkennen kann.

Ein Sensor bzw. ein Sensorelement kann ein Emitterelement zum Emittieren von elektromagnetischer Primärstrahlung und ein Detektorelement zum Detektieren von elektromagnetischer Sekundärstrahlung in Reaktion auf ein Emittieren von elektromagnetischer Primärstrahlung aufweisen. Es ist allerdings auch möglich, einen solchen Sensor bzw. als solches Sensorelement lediglich als Detektorelement auszugestalten, das Tageslicht bzw. Beleuchtungslicht detektiert, ohne dass ein sensorspezifisches Emitterelement vorgesehen wird. Gemäß einem Ausführungsbeispiel kann mindestens eine Reihe seriell angeordneter optisch transparenter Abschnitte in dem Lagerkörper ausgebildet sein. Eine solche Lochreihe kann entlang einer Richtung des Lagerkörpers angeordnet sein, die einer Erstreckungsrichtung bzw. Ausrichtung der Sensorleiste entspricht. Diese Richtung wiederum kann mit einer Tiefe des Lagerkörpers zusammenfallen, wenn dieser an den Befestigungsstrukturen der Lagervorrichtung montiert ist. Sind Lagergüter eines bestimmten Typs (zum Beispiel Lagerboxen, die mit einer bestimmten Schraubenart gefüllt sind) entlang der Erstreckung einer solchen Lochreihe angeordnet bzw. geschichtet, um dort der Reihe nach von einem Benutzer entnommen zu werden, so kann die Detektion einer Lochposition entlang der Lochreihe, an der sich das Detektionssignal ändert, als die Position identifiziert werden, bis zu welcher noch verbleibende Lagergüter vorhanden sind.

Besonders bevorzugt ist es, wenn ein Lagerkörper mehrere zueinander parallele Reihen seriell angeordneter optisch transparenter Abschnitte aufweist. Dann können zum Beispiel mehrere unterschiedliche Typen von Lagergütern den einzelnen Lochreihen zugeordnet werden. Ein Detektionssignal der Sensorelemente entlang einer dieser Lochreihen ist dann einem Restbestand eines dieser Lochreihe und zugehöriger Sensorleiste zugeordneten Typs von Lagergut eindeutig zugeordnet.

Gemäß einem Ausführungsbeispiel kann der Lagereinsatz mindestens einen weiteren optisch transparenten Abschnitt zwischen dem Aufnahmebereich und der Oberseite und mindestens eine weitere Sensorleiste aufweisen, die ausgebildet ist, mittels der Aufnahmestrukturen in dem Aufnahmebereich aufgenommen zu werden und mindestens ein weiteres Sensorelement im Bereich des mindestens einen weiteren optisch transparenten Abschnitts aufweist. Mit anderen Worten können einem Lagerkörper mehrere Sensorleisten und zugeordnete Löcher oder Lochreihen zugeordnet sein.

Gemäß einem Ausführungsbeispiel kann die Sensorleiste starr sein. Wenn die Sensorleiste aus einem rigiden Material gefertigt ist, ist nach deren Einschieben in die Aufnahmestrukturen des Lagerkörpers eine feste und klar definierte Position eines jeweiligen Sensorelements an dieser Sensorleiste in Relation zu einem jeweiligen optisch transparenten Abschnitt in dem Aufnahmebereich sichergestellt. Dann ist eine fehlerrobuste Montage der Sensorleiste an der Unterseite des Lagerkörpers garantiert.

Gemäß einem Ausführungsbeispiel kann die Sensorleiste als gedruckte Leiterplatte (d.h. als PCB, printed circuit board) mit elektrisch leitfähigen Strukturen ausgebildet sein, wobei das mindestens eine Sensorelement auf und/oder in der Leiterplatte montiert und mit den elektrisch leitfähigen Strukturen elektrisch gekoppelt ist. Eine solche Leiterplatte, die zum Beispiel aus ausgehärtetem Harz mit verstärkenden Glasfasern (weiter insbesondere FR4 Material) hergestellt sein kann, bildet einen starren Stützkörper zur Montage der Sensorelemente an einer Oberfläche und/oder zumindest teilweise eingebettet in einem Inneren der Leiterplatte. Dadurch ist die feste Vorgabe einer Relativposition zwischen den Sensorelementen und den optisch transparenten Abschnitten des Lagerkörpers im eingeschobenen Zustand der Leiterplatte sichergestellt. Gleichzeitig können auf und/oder in der Leiterplatte elektrisch leitfähige Strukturen (insbesondere Kupferbahnen) gebildet sein, die eine Versorgung des mindestens einen Sensorelements mit elektrischer Energie sowie den Transport von elektrischen Sensorsignalen bewerkstelligen können. Dadurch sind eine hohe sensorische Qualität, eine elektrische Kopplungsfunktionalität und eine kostengünstige Fertigung der Sensorleiste kombiniert.

Gemäß einem Ausführungsbeispiel kann an der Sensorleiste ein Steckverbinder als elektrische Schnittstelle für den Transport elektrischer Signale zu oder von dem mindestens einen Sensorelement und/oder elektrischer Versorgungsenergie zu dem mindestens einen Sensorelement vorgesehen sein. Der Steckverbinder kann zum Verbinden mit einem Stecker eines Anschlusskabels ausgebildet sein, das entlang des Lagerkörpers geführt sein kann (zum Beispiel in einem Kabelkanal). Der Steckverbinder kann mit den elektrisch leitfähigen Strukturen der als Leiterplatte ausgebildeten Sensorleiste gekoppelt sein. Wenn der Steckverbinder am Ende der Sensorleiste mit einem korrespondierenden Steckelement zum Verbinden mit einer elektrischen Versorgungsspannung und/oder mit einem Abnehmer von Sensorsignalen des mindestens einen Sensorelements der Sensorleiste gekoppelt ist, kann mit einfachen Mitteln ein elektrischer Signal- und Versorgungspfad ausgebildet werden.

Gemäß einem Ausführungsbeispiel kann das mindestens eine Sensorelement ein Emitterelement zum Emittieren von elektromagnetischer Primärstrahlung und ein Detektorelement zum Detektieren von elektromagnetischer Sekundärstrahlung in Reaktion auf ein Emittieren von elektromagnetischer Primärstrahlung aufweisen. Dieses Emitter-Detektor-Zusammenspiel kann in charakteristischer Weise abhängig davon sein, ob der mindestens eine optisch transparente Abschnitt auf der Oberseite von Lagergut bedeckt ist oder nicht. Zum Beispiel kann ein solches Emitterelement eine Leuchtdiode sein, die elektromagnetische Strahlung (insbesondere Licht) in einem vorgebbaren Wellenlängenbereich bzw. bei einer vorgegebenen Wellenlänge aussendet. Diese elektromagnetische Strahlung tritt durch den optisch transparenten Abschnitt hindurch und wird nur dann an einem Lagergut bzw. einer Lagerbox mit solchem Lagergut zumindest teilweise reflektiert, wenn an der Position des optisch transparenten Abschnitts solches Lagergut gelagert ist. Die reflektierte elektromagnetische Sekundärstrahlung kann dann von dem Detektorelement (zum Beispiel eine Fotodiode) an der Sensorleiste detektiert werden. Wenn hingegen kein Lagergut an der Position des optisch transparenten Abschnitts vorhanden ist (zum Beispiel weil sich ein Lagerbestand entsprechend reduziert hat), kann die elektromagnetische Primärstrahlung dort nicht an dem Lagergut oder einer zugeordneten Lagerbox reflektiert werden. Dies führt an der Position des Detektorelements zu einem anderen Detektionssignal als im zuvor beschriebenen Szenario. Anhand des Detektionssignals kann also der Befüllzustand des Lagerkörpers entlang einer Sensorleiste mit hoher Präzision und fehlerrobust ermittelt werden.

Gemäß einem Ausführungsbeispiel kann an dem Lagerkörper ein Kabelkanal gebildet sein. Insbesondere kann an einem einem Benutzer (im an Befestigungsstrukturen einer Lagervorrichtung montierten Zustand des Lagereinsatzes) abgewandten Endabschnitt des Lagerkörpers ein Kabelkanal gebildet sein. In diesem Kabelkanal können elektrische Kabel geführt werden, die mit dem Steckverbinder der Sensorleiste zum Übermitteln von Sensordaten und/oder zum Bereitstellen einer elektrischen Versorgungsspannung elektrisch gekoppelt werden können. Zum Beispiel kann ein solcher Kabelkanal durch Umbiegen einer äußeren Kante des Lagerkörpers (zum Beispiel zu einem C-Profil oder zu einem Stufenprofil) mit geringem Aufwand und entkoppelt von dem Lagerbereich ausgebildet werden.

Gemäß einem Ausführungsbeispiel kann der mindestens eine Lagereinsatz an den Befestigungsstrukturen derart angebracht sein, dass die Oberseite des Lagerkörpers gegenüber einer Horizontalen geneigt ist, insbesondere eine zugehörige Lagerfläche zu einem Benutzer hin abfallend geneigt ist. Gemäß einem solchen bevorzugten Ausführungsbeispiel kann der Lagerkörper im an den Befestigungsstrukturen montierten Zustand eine Neigung gegenüber der Horizontalen aufweisen, sodass auf der Oberseite des Lagerkörpers gelagerte Lagergüter entlang der Neigung bis zu einem (insbesondere benutzerseitigen) Ende des Lagereinsatzes durch die Gravitation herunterrutschen. Zum Beispiel kann der Neigungswinkel in einem Bereich zwischen 2° und 45°, insbesondere in einem Bereich zwischen 5° und 30°, liegen. Der Neigungswinkel kann so ausgewählt werden, dass die zu einem Herabrutschen führende Komponente der Gravitationskraft der Lagergüter größer als eine Haftreibungskraft der Lagergüter an der Oberseite des Lagerkörpers ist. Besonders bevorzugt ist es dabei, dass der Lagerkörper zu einer Benutzerposition vor der Lagervorrichtung hin abfallend geneigt ist. Dadurch rutschen die Lagergüter stets hin zu dem Benutzer, was eine einfache Entnahme der Lagergüter ermöglicht. Gleichzeitig ist durch das Vorsehen einer solchen Neigung sichergestellt, dass eine Reihe optisch transparenter Abschnitte entsprechend einem Befüllungsgrad eines zugeordneten Lagervolumens bis zu einer bestimmten Stelle von Lagergütern frei und erst dann mit Lagergütern bedeckt sind. Die Sensorsignale der Sensorelemente ändern sich daher an dem Übergang charakteristisch oder sprunghaft, sodass anhand der Sensorelemente eine Restbefüllung mit zugeordneten Lagergütern präzise und quantitativ bestimmbar ist.

Gemäß einem Ausführungsbeispiel kann an und/oder in den Befestigungsstrukturen ein Kabelkanal gebildet sein, insbesondere verbunden mit einem Kabelkanal an dem mindestens einen Lagereinsatz. Die elektrischen Kabel können daher zunächst horizontal entlang eines jeweiligen Lagereinsatzes bis zu den Befestigungsstrukturen und von dort ab vertikal an bzw. in diesen verlaufen. Vorzugsweise ist der Kabelkanal (und sind die zugehörigen Kabel) auch an der Schnittstelle zwischen Befestigungsstrukturen und Lagereinsatz von außen unzugänglich. Alle Kabel aller Lagereinsätze einer Lagervorrichtung können daher entlang der Befestigungsstrukturen bis zu einer einzigen gemeinsamen elektronischen Schnittstelle der Lagervorrichtung zu anderen Lagervorrichtungen oder zu der Verwaltungseinrichtung des Lagerverwaltungssystems geführt werden.

Gemäß einem Ausführungsbeispiel können die Befestigungsstrukturen vorzugsweise vertikale Befestigungsstangen aufweisen. Die Befestigungsstangen können mit einem Rechteckprofil ausgebildet werden. Letzteres kann wiederum aus zwei korrespondierenden L- oder Winkel-Profilen gebildet sein. Befestigungsstangen sind eine besonders stabile und kostengünstige Ausführungsform der Befestigungsstrukturen. Sie sind ferner aufgrund ihrer Geometrie geeignet, in ihrem Inneren elektrische Kabel zur Bereitstellung einer elektrischen Energieversorgung der Sensorleisten und/oder zum Transport von Sensorsignalen aufzunehmen. Besonders vorteilhaft ist die Realisierung einer Befestigungsstange mit einem Rechteckprofil, das durch die Verbindung von zwei L- oder Winkel-Profilen hergestellt werden kann. Zwischen zwei solchen L- oder Winkel-Profilen kann ein Kabelkanal gebildet werden. Von diesen beiden L- oder Winkel-Profilen kann eines zum Tragen von Last der Lagervorrichtung ausgebildet sein, und das andere zum Beispiel als Blende ohne signifikanten Beitrag zum Lasttragen an das lasttragende L- oder Winkelelement angesetzt sein.

Gemäß einem Ausführungsbeispiel kann der mindestens eine Lagereinsatz zumindest teilweise mit Lagergut bestückt sein, insbesondere in Form von Warenbehältern, Lagerboxen und/oder Schüttgut. Mittels der Sensorelemente kann für jedes dieser Lagergüter ein verbleibender Befüllzustand sensorisch erfasst werden.

Gemäß einem Ausführungsbeispiel kann die Verwaltungseinrichtung jedem optisch transparenten Abschnitt in jedem Aufnahmebereich und jedem zugehörigen Sensorelement einer Sensorleiste eines jeweils zugehörigen Lagereinsatzes einer jeweiligen Lagervorrichtung ein spezifisches Lagergut zugeordnet und abhängig von Sensorsignalen des zugehörigen Sensorelements das jeweilige spezifische Lagergut verwalten. Insbesondere kann die Verwaltungseinrichtung bedarfsweise eine Nachbestellung des jeweiligen spezifischen Lagerguts auslösen oder durchführen. Wenn eine Sensorleiste also ein Sensorsignal an die Verwaltungseinrichtung übermittelt, das einen Identifizierer dieser Sensorleiste enthält, so kann die Verwaltungseinrichtung nur auf Basis des Sensorsignals und des zugehörigen Identifizierers ermitteln, welche Restmenge eines zugeordneten Typs von Lagergut an der entsprechenden Position vorhanden ist. Sollte diese Restmenge einen bestimmten Schwellwert unterschreiten, kann die Verwaltungseinrichtung eine Nachbestellung speziell dieses Typs von Lagergut in einer von der sensorisch erfassten Restmenge abhängigen Quantität auslösen oder durchführen.

Gemäß einem Ausführungsbeispiel kann die Verwaltungseinrichtung mit den Sensorleisten des mindestens einen Lagereinsatzes der Lagervorrichtungen mittels Kabelverbindungen elektrisch gekoppelt sein. Die Kopplung der Verwaltungseinrichtung mit den Sensorleisten kann also drahtgebunden erfolgen, was besonders zum Bereitstellen elektrischer Versorgungsenergie vorteilhaft ist. Alternativ ist auch eine drahtlose Kopplung möglich. Im letzteren Fall entfällt der Aufwand im Zusammenhang mit Kabelverbindungen.

Gemäß einem Ausführungsbeispiel kann das Lagerverwaltungssystem eine Steuerzentrale (die als Prozessor ausgebildet sein kann) aufweisen, die zum Steuern eines Lagerbestands mit einer Mehrzahl von Verwaltungseinrichtungen (die unterschiedlichen Lagervorrichtungen oder Gruppen von Lagervorrichtungen zugeordnet sein können) kommunizierfähig gekoppelt sein kann (insbesondere drahtlos kommunizierfähig gekoppelt). Die Steuerzentrale kann zum Beispiel die Logistikzentrale eines Unternehmens sein, die eine Nachlieferung von nachbestellten Lagergütern organisiert. Da sich die Steuerzentrale räumlich häufig an einer ganz anderen Position befindet als die Verwaltungseinrichtung, ist eine auch über größere Entfernungen hinweg einfach mögliche drahtlose Kommunikation zwischen Steuerzentrale und Verwaltungseinrichtung vorteilhaft. Eine solche Kommunikation kann zum Beispiel über ein Kommunikationsnetzwerk, zum Beispiel das öffentliche Internet oder ein Telekommunikationsnetzwerk, erfolgen.

Im Folgenden werden exemplarische Ausführungsbeispiele der vorliegenden Erfindung mit Verweis auf die folgenden Figuren detailliert beschrieben.
Figur 1 zeigt ein Lagerverwaltungssystem mit mehreren Lagervorrichtungen, von denen jede mehrere Lagereinsätze gemäß einem exemplarischen Ausführungsbeispiel der Erfindung aufweist.
Figur 2 zeigt eine Lagervorrichtung des Lagerverwaltungssystems gemäß Figur 1.
Figur 3 zeigt ein Detail einer Unterseite eines Lagereinsatzes einer Lagervorrichtung gemäß Figur 2.
Figur 4 zeigt die gesamte Unterseite eines Lagereinsatzes einer Lagervorrichtung gemäß Figur 2.
Figur 5 zeigt ein noch stärker vergrößertes Detail einer Unterseite eines Lagereinsatzes einer Lagervorrichtung gemäß Figur 2.
Figur 6 zeigt die gesamte Oberseite eines Lagereinsatzes einer Lagervorrichtung gemäß Figur 2.
Figur 7A zeigt eine Seitenansicht, Figur 7B zeigt eine Vorderansicht und Figur 7C zeigt eine Rückansicht einer Lagervorrichtung gemäß einem weiteren exemplarischen Ausführungsbeispiel der Erfindung.
Figur 8A zeigt ein Sensorelement eines Lagereinsatzes gemäß einem exemplarischen Ausführungsbeispiel der Erfindung in einen Betriebszustand, in dem in einem zugeordneten Lagerflächenbereich des Lagereinsatzes kein Lagergut gelagert ist.
Figur 8B zeigt das Sensorelement gemäß Figur 8A in einem Betriebszustand, in dem in dem zugeordneten Lagerflächenbereich des Lagereinsatzes Lagergut gelagert ist.
Figur 9 zeigt eine in Leiterplattentechnologie gefertigte Sensorleiste eines Lagereinsatzes gemäß einem Ausführungsbeispiel der Erfindung.
Figur 10A zeigt eine Seitenansicht, Figur 10B zeigt eine Vorderansicht und Figur 10C zeigt eine Rückansicht einer Lagervorrichtung gemäß einem weiteren exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Die Anordnung und die Befestigung von Sensorelementen an einem Lagerkörper (zum Beispiel einem Regalboden) ist herkömmlich mit Schwierigkeiten verbunden. Zum einen müssen die Sensorelemente exakt positioniert sein, da sie andernfalls nichts oder nicht das Richtige messen. Zum anderen ist eine häufige Anforderung, dass die Sensorelemente nicht wesentlich in den Raum hinein reichen sollen, um eine Beschädigung der Sensorelemente zu vermeiden und den für Lagergut zur Verfügung stehenden Raum nicht einzuschränken. Ferner sollten solche Sensorelemente gekapselt sein, um sie vor Staub, Flüssigkeit, etc. zu schützen und eine einfache Reinigung derselben zu ermöglichen. Da Lagervorrichtungen (wie zum Beispiel Regale) in weiten Anwendungsbereichen Verwendung finden sollen, sollten Temperatur- und Feuchtigkeitsschwankungen nicht zu Fehlfunktionen führen.

Vonnöten wäre vor diesem Hintergrund also eine einfache und sichere Montage von Sensorelementen an einem Lagerkörper, bei leichter Austauschbarkeit und günstiger Herstellung der Sensorelemente, die darüber hinaus für einen breiten Temperatur- und Feuchtigkeitsbereich geeignet sein sollen.

Im Weiteren werden exemplarische Ausführungsbeispiele der Erfindung beschrieben, die diese Anforderungen erfüllen.

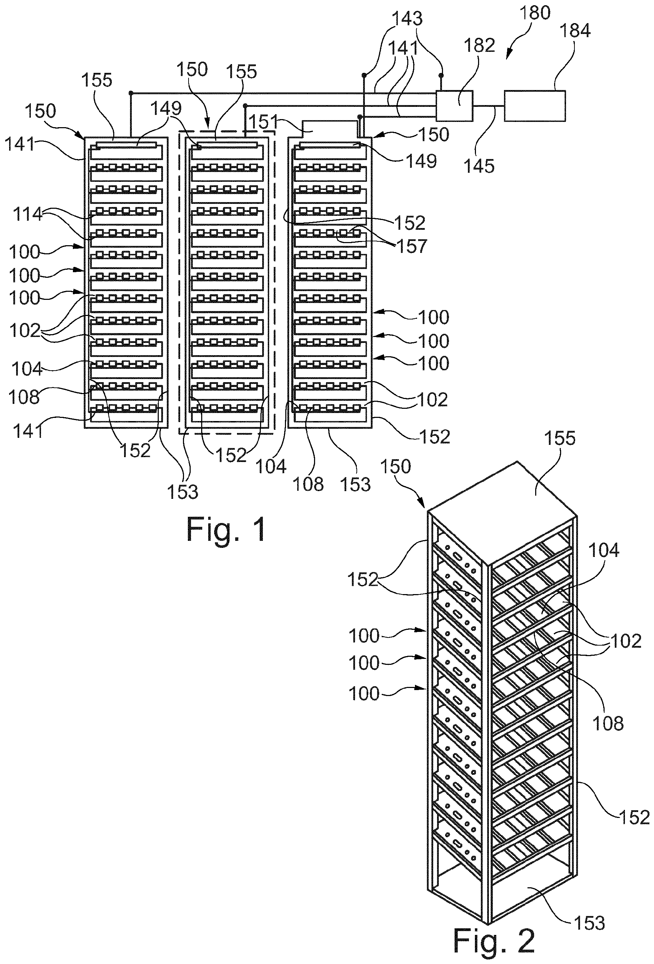

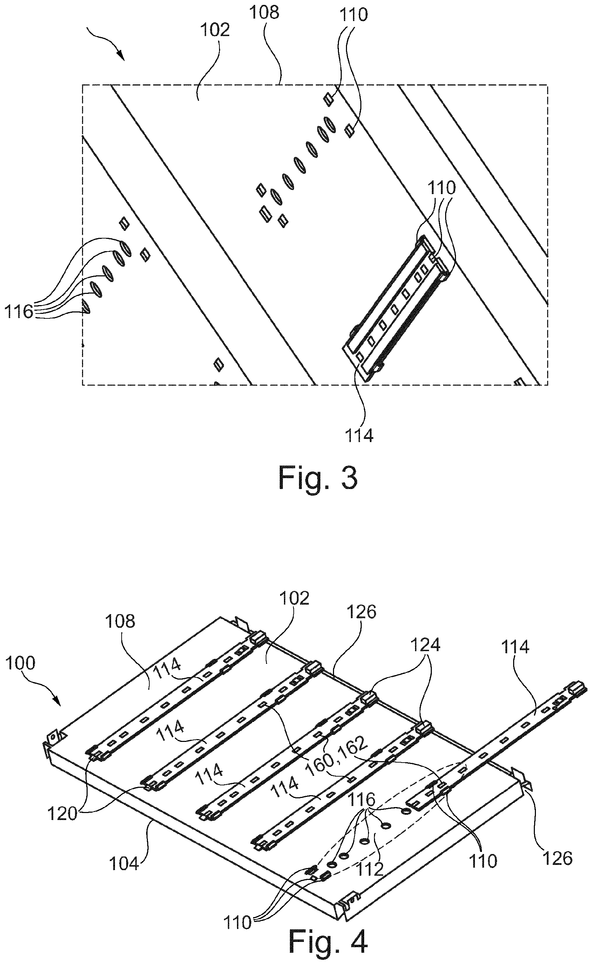

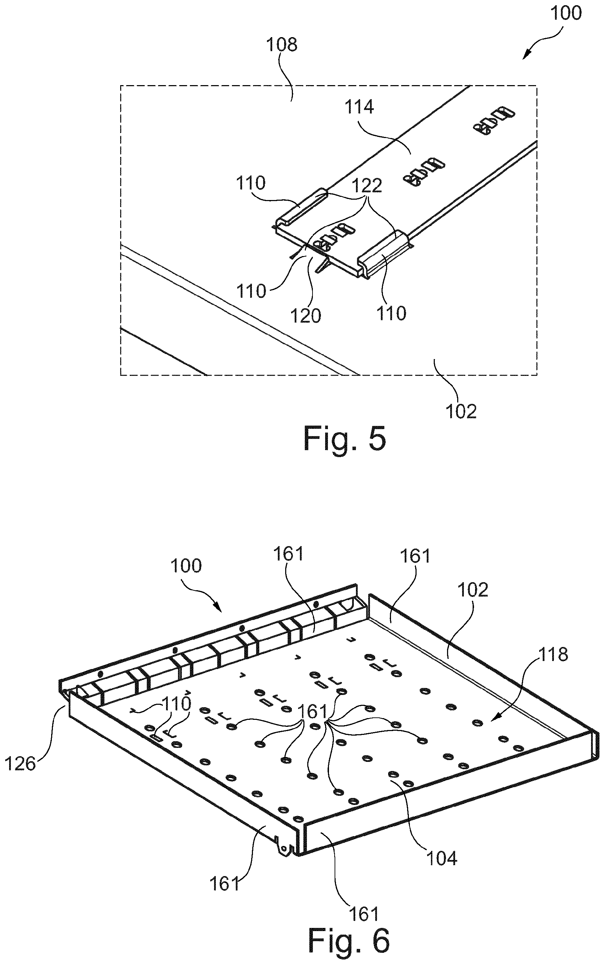

**Figur 1** zeigt ein Lagerverwaltungssystem 180 mit mehreren Lagervorrichtungen 150, von denen jede mehrere Lagereinsätze 100 gemäß einem exemplarischen Ausführungsbeispiel der Erfindung aufweist. **Figur 2** zeigt eine Lagervorrichtung 150 des Lagerverwaltungssystems 180 gemäß Figur 1. **Figur 3** zeigt ein Detail einer Unterseite 108 eines Lagereinsatzes 100 der Lagervorrichtung 150 gemäß Figur 2. **Figur 4** zeigt die gesamte Unterseite 108 des Lagereinsatzes 100 der Lagervorrichtung 150 gemäß Figur 2. **Figur 5** zeigt ein noch stärker vergrößertes Detail der Unterseite 108 des Lagereinsatzes 100 der Lagervorrichtung 150 gemäß Figur 2. **Figur 6** zeigt die gesamte Oberseite 104 des Lagereinsatzes 100 der Lagervorrichtung 150 gemäß Figur 2.

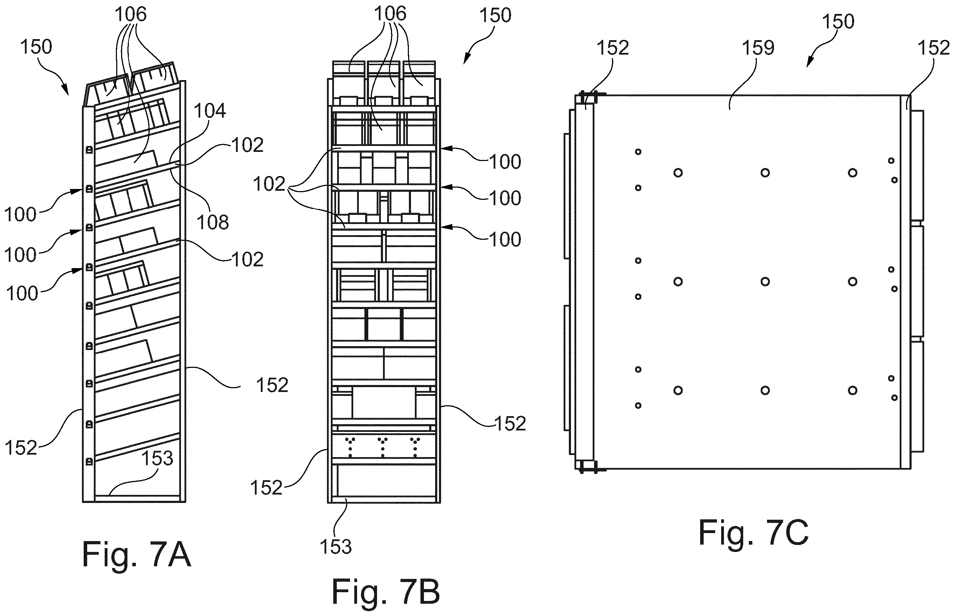

Bezugnehmend auf Figur 1 ist also ein Lagerverwaltungssystem 180 geschaffen, das in dem dargestellten Ausführungsbeispiel drei Lagervorrichtungen 150 in Form von Lagerregalen oder Lagertürmen aufweist. Eine als Prozessor ausgebildete Verwaltungseinrichtung 182 ist über elektrische Verbindungskabel 141 mit Sensorelementen an Sensorleisten 114 der Lagereinsätze 100 gekoppelt und ist eingerichtet, basierend auf Sensorsignalen der Sensorelemente der Lagereinsätze 100 einen jeweiligen Bestand von jeweiligem Lagergut (nicht dargestellt in Figur 1 bis Figur 6, vergleiche zum Beispiel Bezugszeichen 106 in Figur 7A bzw. Figur 7B) auf einem jeweiligen der Lagereinsätze 100 zu verwalten. Zu diesem Zweck ordnet - vergleiche Figur 4 und Figur 6 - die Verwaltungseinrichtung 182 jedem optisch transparenten Abschnitt 116 in jedem Aufnahmebereich 112 und jedem zugehörigen Sensorelement einer Sensorleiste 114 eines jeweils zugehörigen Lagereinsatzes 100 einer jeweiligen Lagervorrichtung 150 ein spezifisches Lagergut 106 zu. Abhängig von Sensorsignalen des zugehörigen Sensorelements verwaltet die Verwaltungseinrichtung 182 dann das jeweilige spezifische Lagergut 106. Bedarfsweise kann zum Beispiel durch die Verwaltungseinrichtung 182 eine Nachbestellung des jeweiligen spezifischen Lagerguts 106 durchgeführt oder ausgelöst werden. Wie bereits angesprochen, ist die Verwaltungseinrichtung 182 mit den Sensorleisten 114 aller Lagereinsätze 100 aller Lagervorrichtungen 150 mittels Kabelverbindungen (siehe Bezugszeichen 141) elektrisch gekoppelt. Über die Kabel 141 wird auch von einer elektrischen Energieversorgung 143 bereitgestellte elektrische Energie zur Versorgung der Sensorelemente übertragen.

Eine bezüglich des Lagers, in dem die Lagervorrichtungen 150 und die Verwaltungseinrichtung 182 angeordnet sind, externe Steuerzentrale 184 ist zum Steuern eines Lagerbestands mit der Verwaltungseinrichtung 182 (und optional auch mit anderen Verwaltungseinrichtungen anderer Lager, die in Figur 1 nicht dargestellt sind) drahtlos kommunizierfähig gekoppelt. Abhängig von den sensorisch ermittelten Restbeständen der Lagergüter 106 auf den jeweiligen Lagereinsätzen 100 kann die Verwaltungseinrichtung 182 über drahtlose Kommunikationsverbindung 145 eine Kommunikationsnachricht an die externe Steuerzentrale 184 übermitteln, mit der eine Nachbestellung der Lagergüter 106 bei der Steuerzentrale 184 ausgelöst wird. Die Steuerzentrale 184 kann zum Beispiel einen Prozessor und einen Router sowie eine elektrische Energieversorgung aufweisen.

Wie ferner in Figur 1 und auch in Figur 2 dargestellt, weist jede der drei Lagervorrichtungen 150 jeweils vier Befestigungsstrukturen 152 zum Befestigen der zugeordneten Lagereinsätze 100 auf verschiedenen Höhenniveaus auf. Mit anderen Worten sind die Lagereinsätze 100 an den Befestigungsstrukturen 152 übereinander angebracht bzw. montiert. Die Befestigungsstrukturen 152 sind als vertikale Befestigungsstangen mit einem Rechteckprofil ausgebildet und können zum Beispiel durch zwei aneinander montierte L-Profile bzw. Winkelprofile gebildet sein. Im Inneren der Befestigungsstrukturen 152 verläuft jeweils ein vertikaler Kabelkanal 126, in dem Kabel 141 geführt sind. Ferner ist der vertikale Kabelkanal 126 mit jeweiligen horizontalen Kabelkanälen 126 an jedem der Lagereinsätze 100 verbunden, um dadurch eine durchgehende Kabelführung von den Sensorelementen bis zu der Verwaltungseinrichtung 182 bzw. bis zu der Energieversorgung 143 zu ermöglichen.

Wie ebenfalls in Figur 1 zu erkennen ist, kann an einer jeweiligen Oberseite jeder Lagervorrichtung 150 eine Mastereinrichtung 149 vorgesehen sein, die zum Sammeln und/oder (Vor-)Verarbeiten der Detektionssignale der Sensorelemente ihrer zugeordneten Lagereinsätze 100 und zur Bereitstellung einer Energieversorgung der Sensorelemente der zugeordneten Lagereinsätze 100 ausgebildet sein kann. An einer Oberseite einer jeweiligen Lagervorrichtung 100 kann darüber hinaus eine Abdeckung 151 angebracht sein. Es ist ebenfalls möglich, eine jeweilige Lagervorrichtung 150 mit einer Bodenplatte 153 und/oder einer Deckplatte 155 auszustatten. Ferner ist es möglich, wie in Figur 1 dargestellt, unterschiedliche Kompartments oder Lagerbereiche eines Lagereinsatzes 100 mit einem Separator 157, d.h. einem mechanischen Trennglied, abzugrenzen. Dadurch können getrennte Kompartments zum Aufnehmen unterschiedlicher Lagergüter 106 separiert werden.

Im Weiteren wird bezugnehmend auf Figur 3 bis Figur 6 der Aufbau der Lagereinsätze 100 näher beschrieben.

Jeder der Lagereinsätze 100 weist einen fertigungstechnisch einfach als gebogene und gestanzte Blechplatte ausgebildeten flächigen Lagerkörper 102 auf (vorliegend einen Regalboden). Eine Oberseite 104 des Lagerkörpers 102, die bei bestimmungsgemäßer Benutzung des Lagereinsatzes 100 gemäß Figur 1 oder Figur 2 nach oben gerichtet ist, dient als Lagerfläche zum Aufnehmen von Lagergut 106. An der Oberseite 104 des Lagerkörpers 102 ist, wie in Figur 6 zu erkennen, ein gegenüber seitlichen (und zum Beispiel zumindest abschnittsweise vertikalen) Begrenzungswänden 161 räumlich zurückversetztes Aufnahmevolumen 118 zum Aufnehmen des Lagerguts 106 abgegrenzt.

Eine der Oberseite 104 gegenüberliegende Unterseite 108 des Lagereinsatzes 100, die bei bestimmungsgemäßer Benutzung des Lagereinsatzes 100 gemäß Figur 1 oder Figur 2 nach unten gerichtet ist, ist in jedem von nebeneinander angeordneten Aufnahmebereichen 112 mit Aufnahmestrukturen 110 zum Aufnehmen einer jeweiligen Sensorleiste 114 ausgestattet. Die Aufnahmestrukturen 110 weisen Führungsnasen auf, die sich von der Unterseite 108 aus nach unten erstrecken und zum schubladenartigen Einschieben oder Herausziehen der Sensorleiste 114 dienen. Diese Führungsnasen halten die Sensorleiste 114 an ihren beiden einander gegenüberliegenden Langseiten an mehreren Positionen. Ferner enthalten die Aufnahmestrukturen 110 einen Anschlag 120 zum Definieren einer Endposition der aufgenommenen Sensorleiste 114. Wenn eine Sensorleiste 114 entlang einer Längsrichtung in einen Aufnahmebereich 112 eingeschoben wird, halten die Führungsnasen die Sensorleiste 114 seitlich. Hat die Sensorleiste 114 in Längsrichtung, d.h. in Einschiebrichtung, ihre Soll-Endposition erreicht, stößt ihre vordere Kurzseite an den Anschlag 120, der dadurch ein unerwünschtes weiteres Einschieben der Sensorleiste 114 begrenzt bzw. verunmöglicht. Wie am besten in Figur 5 zu erkennen ist, sind alle Aufnahmestrukturen 110 als L-förmige bzw. V-förmige Ausklinkungen 122 aus dem Lagerkörper 102 herausgearbeitet. Hierfür werden Laschen in der Blechplatte durch Bilden von Schnitten abgegrenzt und aus der Erstreckungsebene der Blechplatte unter Ausbildung der L-förmigen bzw. V-förmigen Ausklinkungen 122 herausgebogen.

Lochreihen in jedem der Aufnahmebereiche 112 bilden optisch transparente Abschnitte 116 und sind als sich durch den flächigen Lagerkörper 102 vertikal hindurch erstreckende Durchgangslöcher zwischen dem Aufnahmebereich 112 und der Oberseite 104 ausgebildet. Jede Lochreihe ist räumlich einer jeweiligen Sensorleiste 114 zugeordnet und enthält eine Sequenz von voneinander beabstandeten und linear angeordneten Durchgangslöchern durch den Lagerkörper 102. Somit sind die optisch transparenten Abschnitte 116 als Durchgangslöcher in dem Lagerkörper 102 ausgebildet. Die Durchgangslöcher werden derart gebildet, dass dadurch mehrere zueinander parallele Reihen seriell angeordneter optisch transparenter Abschnitte 116 in dem Lagerkörper 102 ausgebildet werden, und zwar eine Reihe pro eingeschobener oder einschiebbarer Sensorleiste 114.

Jedem der mehreren nebeneinander angeordneten Aufnahmebereiche 112, die durch eine jeweilige Reihe optisch transparenter Abschnitte 116 und räumlich zugeordnete Aufnahmestrukturen 110 definiert sind, ist eine jeweilige starre Sensorleiste 114 zugeordnet. Um eine Sensorleiste 114 in einem Aufnahmebereich 112 zu montieren, wird die Sensorleiste 114 von einem Benutzer schubladenartig eingeschoben, um mittels zugeordneter Aufnahmestrukturen 110 in dem jeweiligen Aufnahmebereich 112 in räumlich präzise definierter Weise aufgenommen zu werden. Jede der Sensorleisten 114 weist eine Sequenz bzw. Reihe von optischen Sensorelementen auf, die bei Einschieben der Sensorleiste 114 bis zum Erreichen des Anschlags 120 an einem jeweiligen der seriell angeordneten optisch transparenten Abschnitte 116 zur Anlage kommt. Anders ausgedrückt befindet sich jedes der Sensorelemente der Sensorleiste 114 genau unterhalb eines jeweiligen optisch transparenten Abschnitts 116, wenn die Sensorleiste 114, definiert durch die Aufnahmestrukturen 110, ihre Soll-Position in dem zugeordneten Aufnahmebereich 112 eingenommen hat. In dieser Soll-Position ist ein einwandfreies Zusammenwirken dieser Sensorelemente mit den optisch transparenten Abschnitten 116 zum Detektieren von Lagergut 106 gewährleistet.

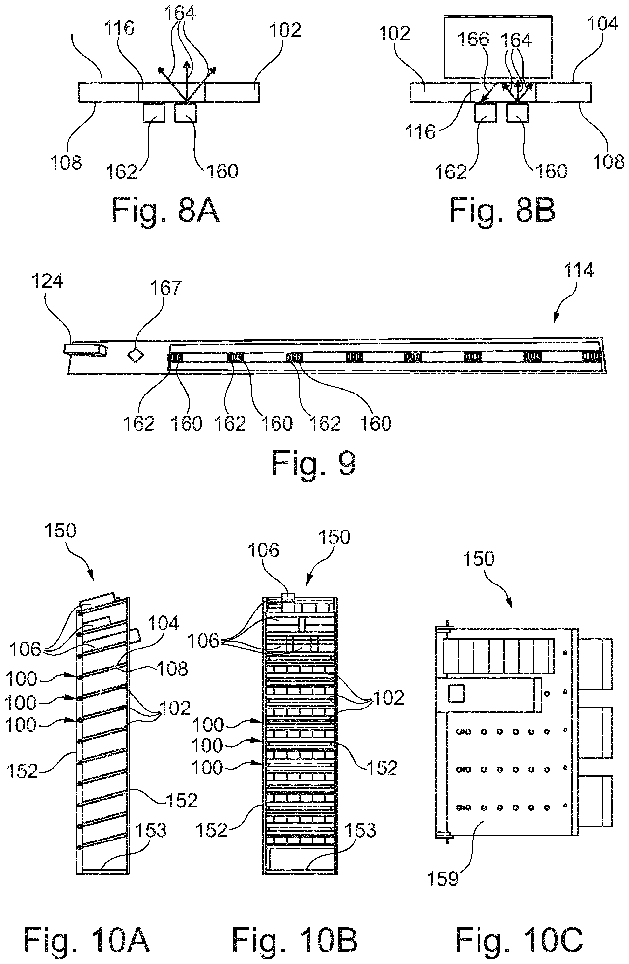

Wie in Figur 4 zu erkennen ist und in Figur 8A und Figur 8B näher gezeigt ist, kann jedes Sensorelement zum Beispiel ein Emitterelement 160 zum Emittieren von elektromagnetischer Primärstrahlung 164 und ein Detektorelement 162 zum Detektieren von elektromagnetischer Sekundärstrahlung 166 in Reaktion auf ein Emittieren von elektromagnetischer Primärstrahlung 164 aufweisen. Die elektromagnetische Primärstrahlung 164 und/oder die elektromagnetische Sekundärstrahlung 166 kann oder können durch den optisch transparenten Abschnitt 116 propagieren. Reflektierte elektromagnetische Sekundärstrahlung 166 kann nur dann in nennenswerter Intensität von dem Detektorelement 162 detektiert werden, wenn der optisch transparente Abschnitt 116 von Lagergut 106 bedeckt ist.

Indem sich die optischen Sensorelemente direkt unter den jeweiligen optisch transparenten Abschnitten 116 des Lagerkörpers 102 befinden, können die optischen Sensorelemente die beiden Zustände optisch unterscheiden, bei denen sich auf dem zugeordneten optisch transparenten Abschnitt 116 Lagergut 106 befindet oder nicht. Befindet sich Lagergut 106 auf dem zugeordneten optisch transparenten Abschnitt 116, verschließt das Lagergut 106 den optisch transparenten Abschnitt 116. Befindet sich kein Lagergut 106 auf dem zugeordneten optisch transparenten Abschnitt 116, bleibt der optisch transparente Abschnitt 116 offen. Die optischen Detektionssignale der Sensorelemente erlauben also den Schluss, ob sich direkt oberhalb des jeweiligen Sensorelements Lagergut 106 befindet oder nicht.

Mit Vorteil ist jede der Sensorleisten 114 als gedruckte Leiterplatte (d.h. als PCB) mit einem dielektrischen Basiskörper aus FR4 Material und daran bzw. darin gebildeten elektrisch leitfähigen Strukturen in Form von Kupferbahnen, Kupfervias, etc. ausgebildet. Die Sensorelemente sind auf der Leiterplatte oberflächenmontiert und mit den elektrisch leitfähigen Strukturen elektrisch gekoppelt. Dadurch ist sichergestellt, dass die Leiterplatte für die Sensorelemente nicht nur als mechanische Stützstruktur bzw. Montagebasis dient, sondern gleichzeitig eine elektrische Verbindung der Sensorelemente mit einer elektrischen Versorgungsspannung sowie mit einer Signalleitung zum Übermitteln von detektierten Sensorsignalen ausbildet. Gleichzeitig hält die Leiterplatte die Sensoren unter den Abschnitten 116. Ferner ist die Sensorleiste 114 an einem Ende mit einem elektrischen Steckverbinder 124 versehen, der mit den elektrisch leitfähigen Strukturen der Leiterplatte elektrisch gekoppelt ist. Der Steckverbinder 124 dient zum Einstecken in ein korrespondierendes elektrisches Steckelement (nicht gezeigt) am Ende der Kabel 141 und zum Transport elektrischer Signale und elektrischer Versorgungsenergie zwischen den Sensorelementen der Sensorleiste 114 und den Kabeln 141. An einem Endabschnitt des Lagerkörpers 102, der im Betrieb einem Benutzer abgewandt ist, ist ein Kabelkanal 126 zum Aufnehmen der Kabel 141 gebildet.

Die Sensorelemente werden auf der Leiterplatte der Sensorleiste 114 angeordnet. Diese Leiterplatte weist neben den Sensorelementen gegebenenfalls noch eine Elektronik zum Ansteuern der Sensorelemente und zur Übermittlung der Messergebnisse auf. Die Sensorelemente sind auf der Leiterplatte an den Stellen angeordnet, an denen der plattenartige Lagerkörper 102 die Ausnehmungen als optisch transparente Abschnitte 116 aufweist. Dadurch sind die Sensorelemente durch den Lagerkörper 102 hindurch mit der Oberseite 104 zum Aufnehmen von Lagergut 106 optisch gekoppelt. Durch die Steifigkeit der Sensorleiste 114 sind die Sensorelemente in festem Abstand zueinander angeordnet und können einfach gehandhabt werden. Durch die Integration der Sensorelemente in die Leiterplatte kann die Messvorrichtung in Form der Sensorleiste 114 für das Vorhandensein von Lagergut 106 in der zugeordneten Lagervorrichtung 150 einfach und kostengünstig hergestellt werden. Die als Sensorleiste 114 ausgebildete Messvorrichtung kann einfach als Ganzes an dem Lagerkörper 102 angeordnet werden und kann durch einfaches Herausziehen und Wiederhineinschieben ausgetauscht werden. Dadurch können Montage- und Reparaturzeiten an der Lagervorrichtung 150 gering gehalten oder sogar minimiert werden. Die Sensorelemente sind vorzugsweise in der Leiterplatte gekapselt, so dass sie leicht von Staub, etc. befreit werden können.

Die Lagervorrichtung 150 weist vertikal verlaufende Stangen als Befestigungsstrukturen 152 sowie dazwischen zum Beispiel horizontal oder leicht gegenüber einer Horizontalen geneigt verlaufende Lagereinsätze 100 als Regalböden auf. Die Seiten der Lagereinsätze können zur Bedienseite der hier als Regal ausgebildeten Lagervorrichtung 150 geneigt sein, damit auf der Oberseite 104 des Lagerkörpers 102 angeordnetes Lagergut 106 aufgrund der Gravitation nach vorne bzw. in Richtung des Bedieners der Lagervorrichtung 150 rutscht. Jeder Lagerkörper 102 weist von seiner Bedienseite in Richtung zu seiner Rückseite verlaufende Lochreihen als optisch transparente Abschnitte 116 auf, die parallel zueinander angeordnet sind. In der dargestellten Ausführungsform sind zum Beispiel fünf Lochreihen in einem Lagerkörper 102 implementiert. Auf den Regalböden bildenden Oberseiten 104 der Lagerkörper 102 können Lagerboxen (siehe Figur 7A) mit Lagergut 106 (beispielsweise Schrauben oder Muttern) oder kann Lagergut 106 direkt angeordnet werden. Auf jeder Lochreihe kann eine Reihe gleicher Lagerboxen (zum Beispiel Kartons) bzw. Lagergüter 106 hintereinander (insbesondere von der Bedienseite in Richtung der Rückseite) angeordnet werden.

Jede Lochreihe weist als Aufnahmestrukturen 110 die nach unten vorstehenden Ausklinkungen (zum Beispiel L-förmig) auf, deren Abstand der Breite der Sensorleiste 114 entsprechen kann. Eine mittels einer Leiterplatte ausgebildete Sensorleiste 114 kann von der Rückseite der hier regalartigen Lagervorrichtung 150 in diese Ausklingen schubladenartig eingeschoben werden, wobei die Sensorleiste 114 nur bis zu einem ebenfalls durch eine Ausklinkung gebildeten Anschlag 120 eingeschoben werden kann. Ist die Sensorleiste 114 in diese mit einfachen Mitteln gebildete Schubladenstruktur korrekt (d.h. bis zum Erreichen des Anschlags 120) eingeschoben, so sind die Sensorelemente der Sensorleiste 114 genau unter den optisch transparenten Abschnitten 116 der jeweiligen Lochreihe angeordnet. Die Sensorleiste 114 weist an ihrem freien Ende eine Steckkupplung bzw. einen Steckverbinder 124 auf. Mit dem Steckverbinder 124 kann die Sensorleiste 114 (genauer gesagt deren Sensorelemente) mit einer Elektronik eines Warenwirtschaftssystems verbunden werden kann. Diese Elektronik kann die Sensorelemente ansteuern und Signale von den Sensorelementen erhalten bzw. arbeiten und/oder kann eine Stromversorgung bereitstellen.

Sind die hier als Türme ausgebildeten Lagervorrichtungen 150 nebeneinander angeordnet, so kann es vorteilhaft sein, Kabel 141 von einer turmartigen Lagervorrichtung 150 zu einer anderen turmartigen Lagervorrichtung 150 zu führen. Die Kabel 141 können mit Vorteil in einem Kabelkanal 126 geführt werden, ohne dabei aus dem Kabelkanal 126 hervorzustehen. Auf der anderen Seite soll ein jeweiliges Kabel 141 auf einfache Weise von einer Lagervorrichtung 150 zu einer anderen geführt werden. Zu diesem Zweck weist der Kabelkanal 126 einer jeden Lagervorrichtung 150 eine seitliche Begrenzung zum Kabelkanal 126 der benachbarten Lagervorrichtung 150 auf. In dieser kann zum Beispiel ein perforierter Abschnitt gebildet sein, der vorzugsweise ohne Werkzeug einfach herausgedrückt werden kann, um eine Öffnung zum Kabelkanal 126 der nächsten bzw. benachbarten Lagervorrichtung 150 bereitzustellen. Das Vorsehen von Kabelkanälen 126 ist jedoch optional.

Die in dem dargestellten Ausführungsbeispiel als Regalstangen ausgebildeten Befestigungsstrukturen 152 der Lagervorrichtungen 150 sind in diesem Ausführungsbeispiel mit einem rechtwinkligen Profil ausgebildet. Zur Bildung eines vertikalen Kabelkanals 126 kann ein weiteres rechtwinkliges Profil angefügt werden, das mit einer Befestigungsstruktur 152 und mit einem oder mehreren Lagereinsätzen 100 (zum Beispiel Regalböden) in Verbindung steht, wodurch ein Hohlrohr mit rechtwinkligem Querschnitt gebildet wird. Dadurch kann ein vertikaler und im Querschnitt rechtwinkliger Kabelkanal 126 gebildet werden, in dem die Kabel 141 geführt werden können, die von den Sensorleiste 114 kommen. Das Kabelkanalprofil kann Auskerbungen für die hier als Regalböden ausgebildeten Lagereinsätze 100 aufweisen. Die Lagereinsätze 100 können an ihrer Rückseite eine Anschlagkante aufweisen. Die Kabelkanalprofile können einen vertikal verlaufenden Hinterschnitt aufweisen. Dieser Hinterschnitt kann so ausgebildet werden, dass der Hinterschnitt in die Kante des Lagerkörpers 102 von oben einsteckend greifen kann, wodurch das Profil zuverlässig und sicher gehalten ist.

Ähnlich dem oben beschriebenen Kabelkanalprofil für die Befestigungsstrukturen 152 kann an der Rückseite des Lagerkörpers 102 ein Profil gebildet sein, das an die hintere Kante des Lagerkörpers 102 gesteckt werden kann, um einen horizontalen Kabelkanal 126 zu bilden. In diesem horizontalen Kabelkanal 126 können die Kabel 141 von den einzelnen Leiterplatinen bzw. Sensorleisten 114 gebündelt geführt werden. Dies kann bis zu dem jeweiligen vertikalen Kabelkanal 126 erfolgen, der an der hier als Regalstange ausgebildeten Befestigungsstruktur 152 geführt ist.

Die Kabel 141 der einzelnen Sensorleisten 114 können von einem jeweiligen Lagerkörper 102 zu dem vertikalen Kabelkanal 126 einer Befestigungsstruktur 152 geführt werden. Die an dem vertikalen Kabelkanal 126 ankommenden Kabel 141 können zu einem horizontalen Boden geführt werden, der auf den vier Befestigungsstrukturen 152 der Lagervorrichtung 150 aufliegt. Auf diesem Lagerkörper 102 kann sich zum Beispiel ein Datenlogger mit Router zur Verbindung mit einem Lagerwirtschaftssystem befinden. Es ist allerdings auch möglich, dass die Kabel 141 einer Lagervorrichtung 150 zu einer benachbarten Lagervorrichtung 150 weitergeleitet werden, auf der dann ein Datenlogger mit Router stehen kann.

**Figur 7A** zeigt eine Seitenansicht, **Figur 7B** zeigt eine Vorderansicht und **Figur 7C** zeigt eine Rückansicht einer Lagervorrichtung 150 gemäß einem weiteren exemplarischen Ausführungsbeispiel der Erfindung.

Figur 7A ist zu entnehmen, dass die Lagereinsätze 100 an den Befestigungsstrukturen 152 derart angebracht sind, dass ihre Oberseiten 104 gegenüber der Horizontalen zu einem Benutzer hin abfallend geneigt sind. Dadurch rutschen, wie ebenfalls in Figur 7A gezeigt, die Lagergüter 106 bzw. die Lagerboxen hin zu einem Benutzer. Bei teilgefüllten Lagereinsätzen 100 sind daher optisch transparente Abschnitte 116 in einem hinteren Bereich der Lagereinsätze 100 von Lagergütern 106 frei, wohingegen in einem vorderen Bereich der Lagereinsätze 100 optisch transparente Abschnitte 116 mit Lagergütern 106 bedeckt sind. Dieser klar definierte Übergang erleichtert die sensorische Bestimmung des Befüllungsgrads eines Lagereinsatzes 100 mit Lagergütern 106.

In Figur 7C ist zu sehen, dass die Seitenflächen der Lagervorrichtung 150 zwischen jeweiligen Befestigungsstrukturen 152 mit einer Seitenwand 159 bedeckt sein können.

**Figur 8A** zeigt ein Sensorelement eines Lagereinsatzes 100 gemäß einem exemplarischen Ausführungsbeispiel der Erfindung in einen Betriebszustand, in dem in einem zugeordneten Lagerflächenbereich des Lagereinsatzes 100, d.h. über dem optisch transparenten Abschnitt 116, kein Lagergut 104 gelagert ist. **Figur 8B** zeigt das Sensorelement gemäß Figur 8A in einem Betriebszustand, in dem in dem zugeordneten Lagerflächenbereich des Lagereinsatzes 100, d.h. über dem optisch transparenten Abschnitt 116, Lagergut 106 bzw. eine Lagerbox mit Lagergut 106 gelagert ist.

Wie in Figur 8A und Figur 8B gezeigt, weist das Sensorelement ein Emitterelement 160 zum Emittieren von elektromagnetischer Primärstrahlung 164 und ein Detektorelement 162 zum Detektieren von elektromagnetischer Sekundärstrahlung 166 in Reaktion auf ein Emittieren und Reflektieren von elektromagnetischer Primärstrahlung 164 auf. Das Emitterelement 160 kann zum Beispiel eine Leuchtdiode sein. Das Detektorelement 162 kann zum Beispiel eine Fotodiode sein. Abhängig davon, ob der mindestens eine optisch transparente Abschnitt 116 auf der Oberseite 104 von Lagergut 106 bedeckt ist oder nicht ändert sich das Reflektionsverhalten und somit ein Detektionssignal, dass das Detektorelement 162 erfasst.

Wenn, wie in Figur 8A dargestellt, kein Lagergut 106 den optisch transparenten Abschnitt 116 bedeckt, wird die emittierte elektromagnetische Primärstrahlung 164 nicht an dem Lagergut 106 reflektiert. Auf die emittierte elektromagnetische Primärstrahlung 164 zurückgehende elektromagnetische Sekundärstrahlung 166 kann in dem Szenario gemäß Figur 8A daher im Detektorelement 162 nicht detektiert werden.

Wenn hingegen, wie in Figur 8B dargestellt, Lagergut 106 den optisch transparenten Abschnitt 116 bedeckt, wird die emittierte elektromagnetische Primärstrahlung 164 an dem Lagergut 106 reflektiert. In der Folge wird in Reaktion auf das Emittieren der elektromagnetischen Primärstrahlung 164 reflektierte elektromagnetische Sekundärstrahlung 166 auf das Detektorelement 162 einfallen und kann dort detektiert werden.

Folglich kann mit der dargestellten Konfiguration ein Befüllzustand des Lagereinsatzes 100 sensorisch ermittelt werden.

**Figur 9** zeigt eine Sensorleiste 114 eines Lagereinsatzes 100 gemäß einem Ausführungsbeispiel der Erfindung. Die in Figur 9 dargestellte Sensorleiste 114 mit einem Länge-zu-Breite-Verhältnis von über zehn (allgemeiner von mindestens fünf) ist als gedruckte Leiterplatte ausgeführt, an der die Emitterelemente 160 und die Detektorelemente 162 oberflächenmontiert sind. In Figur 9 nicht im Detail dargestellte elektrisch leitfähige Strukturen der Leiterplatte koppeln die Emitterelemente 160 und die Detektorelemente 162 mit einem Steuerchip 167 und mit einem Steckverbinder 124.

**Figur 10A** zeigt eine Seitenansicht, **Figur 10B** zeigt eine Vorderansicht und **Figur 10C** zeigt eine Rückansicht einer Lagervorrichtung 150 gemäß einem weiteren exemplarischen Ausführungsbeispiel der Erfindung. Hinsichtlich der Merkmale dieses Ausführungsbeispiels wird im Wesentlichen auf die Beschreibung zu Figur 7A bis Figur 7C verwiesen. Während gemäß Figur 7A bis Figur 7C die Lagerboxen zur Aufnahme der Lagergüter 106 Kunststoffboxen sein können, können Lagerboxen zur Aufnahme von Lagergütern 106 gemäß Figur 10A bis Figur 10C Papier- oder Kartonbehälter sein. Wie in Figur 10C dargestellt ist, kann die Seitenwand 159 auch teilweise offen ausgestaltet sein. Ergänzend ist darauf hinzuweisen, dass "aufweisend" keine anderen Elemente oder Schritte ausschließt und "eine" oder "ein" keine Vielzahl ausschließt. Bezugszeichen in den Ansprüchen sind nicht als Einschränkung anzusehen.

## Patentansprüche

1. Lagereinsatz (100) zum Einsetzen in eine Lagervorrichtung (150), wobei der Lagereinsatz (100) aufweist:
eine Sensorleiste (114), einen Lagerkörper (102) mit:
einer Oberseite (104) zum Aufnehmen von Lagergut (106);
einer Unterseite (108) mit Aufnahmestrukturen (110) in einem Aufnahmebereich (112) zum Aufnehmen der Sensorleiste (114); und
mindestens einem optisch transparenten Abschnitt (116) zwischen dem Aufnahmebereich (112) und der Oberseite (104); und
die Sensorleiste (114), die ausgebildet ist, mittels der Aufnahmestrukturen (110) in dem Aufnahmebereich (112) aufgenommen zu werden und mindestens ein Sensorelement im Bereich des mindestens einen optisch transparenten Abschnitts (116) aufweist;
wobei der Lagerkörper (102) als gestanztes und gebogenes Lagerblech ausgebildet ist.

2. Lagereinsatz (100) gemäß Anspruch 1, wobei an der Oberseite (104) des Lagerkörpers (102) ein Aufnahmevolumen (118) zum Aufnehmen des Lagerguts (106) abgegrenzt ist, insbesondere mittels Begrenzungswänden (161) abgegrenzt ist.

3. Lagereinsatz (100) gemäß einem der Ansprüche 1 und 2, wobei die Aufnahmestrukturen (110) zum, insbesondere schubladenartigen, Einschieben oder Herausziehen der Sensorleiste (114) ausgebildet sind; und/oder
wobei die Aufnahmestrukturen (110) einen Anschlag (120) zum Definieren einer Endposition der aufgenommenen Sensorleiste (114) aufweisen, wobei der Lagerkörper (102) einschließlich den Aufnahmestrukturen (110) vorzugsweise als gestanztes und gebogenes Lagerblech ausgebildet ist.

4. Lagereinsatz (100) gemäß einem der Ansprüche 1 bis 3, wobei die Aufnahmestrukturen (110) als abgewinkelte Biegeabschnitte oder Ausklinkungen (122), insbesondere als L-förmige und/oder V-förmige abgewinkelte Biegeabschnitte oder Ausklinkungen (122), in dem Lagerkörper (102) ausgebildet sind.

5. Lagereinsatz (100) gemäß einem der Ansprüche 1 bis 4,
wobei der mindestens eine optisch transparente Abschnitt (116) als Durchgangsloch durch den Lagerkörper (102) ausgebildet ist; und/oder
wobei mindestens eine Reihe seriell angeordneter optisch transparenter Abschnitte (116), insbesondere mehrere zueinander parallele Reihen seriell angeordneter optisch transparenter Abschnitte (116), in dem Lagerkörper (102) ausgebildet ist oder sind.

6. Lagereinsatz (100) gemäß einem der Ansprüche 1 bis 5, wobei der Lagereinsatz (100) aufweist:
mindestens einen weiteren optisch transparenten Abschnitt (116) zwischen dem Aufnahmebereich (112) und der Oberseite (104); und
mindestens eine weitere Sensorleiste (114), die ausgebildet ist, mittels der Aufnahmestrukturen (110) aufgenommen zu werden, und mindestens ein weiteres Sensorelement im Bereich des mindestens einen weiteren optisch transparenten Abschnitts (116) aufweist.

7. Lagereinsatz (100) gemäß einem der Ansprüche 1 bis 6, wobei die Sensorleiste (114) starr ist; und/oder
wobei die Sensorleiste (114) als gedruckte Leiterplatte mit elektrisch leitfähigen Strukturen ausgebildet ist, wobei das mindestens eine Sensorelement auf und/oder in der Leiterplatte montiert und mit den elektrisch leitfähigen Strukturen elektrisch gekoppelt ist.

8. Lagereinsatz (100) gemäß einem der Ansprüche 1 bis 7, wobei die Sensorleiste (114) einen mit dem mindestens einen Sensorelement elektrisch verbundenen Steckverbinder (124), insbesondere zum Transport elektrischer Signale und/oder elektrischer Versorgungsenergie, zum Verbinden mit einem Anschlusskabel (141) aufweist.

9. Lagereinsatz (100) gemäß einem der Ansprüche 1 bis 8, wobei das mindestens eine Sensorelement ein Emitterelement (160) zum Emittieren von elektromagnetischer Primärstrahlung (164) und ein Detektorelement (162) zum Detektieren von elektromagnetischer Sekundärstrahlung (166) in Reaktion auf ein Emittieren von elektromagnetischer Primärstrahlung (166) aufweist, wenn der dem Sensorelement zugeordnete optisch transparente Abschnitt (116) auf der Oberseite (104) von Lagergut (106) bedeckt ist, wobei das Detektorelement (162) vorzugsweise angeordnet ist, keine oder weniger elektromagnetischer Sekundärstrahlung (166) in Reaktion auf ein Emittieren von elektromagnetischer Primärstrahlung (166) zu detektieren, wenn der dem Sensorelement zugeordnete optisch transparente Abschnitt (116) auf der Oberseite (104) nicht von Lagergut (106) bedeckt ist.

10. Lagereinsatz (100) gemäß einem der Ansprüche 1 bis 9, wobei an dem Lagerkörper (102), insbesondere an einem einem Benutzer abgewandten Endabschnitt des Lagerkörpers (102), ein Kabelkanal (126) gebildet ist, wobei der Lagerkörper (102) einschließlich den Aufnahmestrukturen (110) und des Kabelkanals (126) vorzugsweise als gestanztes und gebogenes Lagerblech ausgebildet ist.

11. Lagervorrichtung (150), aufweisend:
Befestigungsstrukturen (152), insbesondere Regalstangen, zum Befestigen von mindestens einem Lagereinsatz (100);
mindestens einen Lagereinsatz (100) gemäß einem der Ansprüche 1 bis 10, der an den Befestigungsstrukturen (152) befestigt oder befestigbar ist.

12. Lagervorrichtung (150) gemäß Anspruch 11,
die als Lagerregal oder Lagerschrank ausgebildet ist; und/oder
wobei der mindestens eine Lagereinsatz (100) an den Befestigungsstrukturen (152) derart angebracht ist, dass die Oberseite (104) gegenüber der Horizontalen geneigt ist, insbesondere zu einem Benutzer hin abfallend geneigt ist; und/oder
wobei an und/oder in den, insbesondere vertikalen, Befestigungsstrukturen (152) ein Kabelkanal (126) gebildet ist, insbesondere verbunden mit einem Kabelkanal (126) an dem mindestens einen, insbesondere horizontal verlaufenden, Lagereinsatz (100); und/oder
wobei die Befestigungsstrukturen (152), insbesondere hohle, Befestigungsstangen aufweisen, insbesondere mit einem, weiter insbesondere aus zwei korrespondierenden L-Profilen gebildeten, Rechteckprofil; und/oder
wobei der mindestens eine Lagereinsatz (100) zumindest teilweise mit Lagergut (106) bestückt ist, insbesondere in Form von Lagerboxen, Warenbehältern und/oder Schüttgut.

13. Lagerverwaltungssystem (180), aufweisend:
eine Mehrzahl von Lagervorrichtungen (150) gemäß einem der Ansprüche 11 und 12;
eine Verwaltungseinrichtung (182), die eingerichtet ist, basierend auf Sensorsignalen der Sensorelemente einen Bestand von Lagergut (106) auf den Lagereinsätzen (100) zu verwalten.

14. Lagerverwaltungssystem (180) gemäß Anspruch 13,
wobei in der Verwaltungseinrichtung (182) jedem optisch transparenten Abschnitt (116) in jedem Aufnahmebereich (112) und jedem zugehörigen Sensorelement einer Sensorleiste (114) eines jeweils zugehörigen Lagereinsatzes (100) einer jeweiligen Lagervorrichtung (150) ein spezifisches Lagergut (106) zugeordnet ist und abhängig von Sensorsignalen des zugehörigen Sensorelements das jeweilige spezifische Lagergut (106) verwaltet wird, insbesondere bedarfsweise eine Nachbestellung des jeweiligen spezifischen Lagerguts (106) durchgeführt oder ausgelöst wird; und/oder
wobei die Verwaltungseinrichtung (182) mit den Sensorleisten (114) der Lagereinsätze (100) der Lagervorrichtungen (150) mittels Kabelverbindungen elektrisch gekoppelt ist; und/oder
aufweisend eine Steuerzentrale (184), die zum Steuern eines Lagerbestands mit einer Mehrzahl von Verwaltungseinrichtungen (182) kommunizierfähig gekoppelt ist, insbesondere drahtlos kommunizierfähig gekoppelt ist.

15. Verwendung eines Lagereinsatzes (100) gemäß einem der Ansprüche 1 bis 10 oder einer Lagervorrichtung (150) gemäß einem der Ansprüche 11 und 12 oder eines Lagerverwaltungssystems (180) gemäß einem der Ansprüche 13 und 14 zum Verwalten eines Bestands von Lagergut (106).

## Claims

1. Storage insert (100) for inserting into a storage device (150), wherein the storage insert (100) comprises:
a sensor rail (114), a storage body (102) with:
a top side (104) for receiving storage goods (106);
a bottom side (108) with receiving structures (110) in a receiving region (112) for receiving the sensor rail (114); and
at least one optically transparent portion (116) between the receiving region (112) and the top side (104); and
the sensor rail (114) which is configured to be received by the receiving structures (110) in the receiving region (112) and comprises at least one sensor element in the region of the at least one optically transparent portion (116);
wherein the storage body (102) is configured as punched and bent storage sheet.

2. Storage insert (100) according to claim 1, wherein at the top side (104) of the storage body (102), a receiving volume (118) for receiving storage goods (106) is delimited, in particular delimited by boundary walls (161).

3. Storage insert (100) according to one of the claims 1 and 2, wherein the receiving structures (110) are configured for, in particular in a drawer-like manner, pushing-in or pulling-out the sensor rail (114); and/or
wherein the receiving structures (110) comprise a stopper (120) for defining an end position of the received sensor rail (114), wherein the storage body (102) inclusively the receiving structures (110) is preferably configured as punched and bent storage sheet.

4. Storage insert (100) according to one of the claims 1 to 3, wherein the receiving structures (110) are configured as angled bending portions or notches (122), in particular as L-shaped and/or V-shaped angled bending portions or notches (122), in the storage body (102).

5. Storage insert (100) according to one of the claims 1 to 4,
wherein the at least one optically transparent portion (116) is configured as through hole through the storage body (102); and/or
wherein at least one row of serially arranged optically transparent portions (116), in particular multiple rows, which are in parallel with respect to each other, of serially arranged optically transparent portions (116) is or are formed in the storage body (102).

6. Storage insert (100) according to one of the claims 1 to 5, wherein the storage insert (100) comprises:
at least one further optically transparent portion (116) between the receiving region (112) and the top side (104); and
at least one further sensor rail (114) which is configured to be received by the receiving structures (110), and
at least one further sensor element in the region of the at least one further optically transparent portion (116).

7. Storage insert (100) according to one of the claims 1 to 6, wherein the sensor rail (114) is rigid; and/or
wherein the sensor rail (114) is configured as printed circuit board with electrically conductive structures, wherein the at least one sensor element is mounted on an/or in the circuit board and is electrically coupled with the electrically conductive structures.

8. Storage insert (100) according to one of the claims 1 to 7, wherein the sensor rail (114) comprises a plug connector (124) which is electrically connected to the at least one sensor element, in particular for a transport of electrical signals and/or electrical supply energy, for connecting to a connection cable (141).

9. Storage insert (100) according to one of the claims 1 to 8, wherein the at least one sensor element comprises an emitter element (160) for emitting electromagnetic primary radiation (164), and a detector element (162) for detecting electromagnetic secondary radiation (166) in response to emitting electromagnetic primary radiation (166), when the optically transparent portion (116) which is assigned to the sensor element on the top side (104) is covered by the storage goods (106), wherein the detector element (162) is preferably arranged to detect no or less electromagnetic secondary radiation (166) in response to emitting electromagnetic primary radiation (166), when the optically transparent portion (116) which is assigned to the sensor element on the top side (104) is not covered by the storage goods (106).

10. Storage insert (100) according to one of the claims 1 to 9, wherein at the storage body (102), in particular at an end portion of the storage body (102) which is facing away from a user, a cable channel (126) is formed, wherein the storage body, (102) inclusively the receiving structures (110) and the cable channel (126), is preferably configured as punched and bent storage sheet.

11. Storage device (150) comprising:
attachment structures (152), in particular shelf rods, for attaching at least one storage insert (100);
at least one storage insert (100) according to one of the claims 1 to 10 which is attached or attachable to the attachment structures (152).

12. Storage device (150) according to claim 11,
which is configured as storage shelf or storage cabinet; and/or
wherein the at least one storage insert (100) is attached to the attachment structures (152) so that the top side (104) is inclined with respect to the horizontal, in particular downwardly inclined towards the user; and/or
wherein at and/or in the, in particular vertical, attachment structures (152) a cable channel (126) is formed, in particular connected to a cable channel (126) at the at least one, in particular horizontally running, storage insert (100); and/or
wherein the attachment structures (152) comprise, in particular hollow, attachment rods, in particular with a rectangular profile which is further in particular made of two corresponding L-profiles; and/or
wherein the at least one storage insert (100) is at least partially equipped with storage goods (106), in particular in form of storage boxes, article containers and/or bulk material.

13. Storage management system (180) comprising:
a plurality of storage devices (150) according to one of the claims 11 and 12;
a management unit (182) which is configured for managing a stock of storage goods (106) on the storage inserts (100) based on sensor signals of the sensor elements.

14. Storage management system (180) according to claim 13,
wherein in the management unit (182) a specific storage good (106) is assigned to each optically transparent portion (116) in each receiving portion (112) and to each assigned sensor element of a sensor rail (114) of a respectively assigned storage insert (100) of a respective storage device (150), and depending on the sensor signals of the assigned sensor element, the respective specific storage good (106) is managed, in particular upon demand a re-order of the respective specific storage good (106) is performed or triggered; and/or
wherein the management unit (182) is electrically coupled with the sensor rails (114) of the storage inserts (100) of the storage devices (150) by cable connections; and/or
comprising a control center (184) which is communicatively coupled, in particular wirelessly communicatively coupled, with a plurality of management units (182) for controlling a stock.

15. Use of a storage insert (100) according to one of the claims 1 to 10 or a storage device (115) according to one of the claims 11 and 12 or a storage management system (180) according to one of the claims 13 and 14 for managing a stock of storage goods (106).

## Revendications

1. Insert de stockage (100) destiné à être inséré dans un dispositif de stockage (150), dans lequel l'insert de stockage (100) présente :
une barre de capteurs (114), un corps de stockage (102), avec :
- un côté supérieur (104) pour recevoir des produits de stockage (106) ;
- un côté inférieur (108) avec des structures de réception (110) dans une zone de réception (112) pour recevoir la barre de capteurs (114) ; et
- au moins une section optiquement transparente (116) entre la zone de réception (112) et le côté supérieur (104) ; et
la barre de capteurs (114) étant réalisée pour être reçue dans la zone de réception (112) au moyen des structures de réception (110) et présentant au moins un élément de capteur dans la zone d'au moins une section optiquement transparente (116) ;
dans lequel le corps de stockage (102) est réalisé en tant que tôle de stockage estampée et cintrée.

2. Insert de stockage (100) selon la revendication 1, dans lequel un volume de réception (118) pour recevoir les produits de stockage (106) est délimité, en particulier est délimité au moyen de parois de délimitation (161), sur le côté supérieur (104) du corps de stockage (102).

3. Insert de stockage (100) selon l'une quelconque des revendications 1 et 2, dans lequel les structures de réception (110) sont réalisées pour enfiler, en particulier à la manière d'un tiroir, ou retirer la barre de capteurs (114) ; et/ou
dans lequel les structures de réception (110) présentent une butée (120) pour définir une position finale de la barre de capteurs (114) reçue, dans lequel le corps de stockage (102) y compris les structures de réception (110) est réalisé de préférence en tant que tôle de stockage estampée et cintrée.

4. Insert de stockage (100) selon l'une quelconque des revendications 1 à 3, dans lequel les structures de réception (110) sont réalisées en tant que sections de cintrage ou qu'encoches (122) coudées, en particulier en tant que sections de cintrage ou encoches (122) coudées en forme de L et/ou en forme de V dans le corps de stockage (102) .

5. Insert de stockage (100) selon l'une quelconque des revendications 1 à 4,
dans lequel au moins une section optiquement transparente (116) est réalisée en tant que trou traversant à travers le corps de stockage (102) ; et/ou
dans lequel au moins une rangée de sections optiquement transparentes (116) disposées en série, en particulier plusieurs rangées parallèles les unes aux autres de sections optiquement transparentes (116) disposées en série est réalisée ou sont réalisées dans le corps de stockage (102).

6. Insert de stockage (100) selon l'une quelconque des revendications 1 à 5, dans lequel l'insert de stockage (100) présente :
au moins une autre section optiquement transparente (116) entre la zone de réception (112) et le côté supérieur (104) ; et
au moins une autre barre de capteurs (114) qui est réalisée pour être reçue au moyen de structures de réception (110), et
présente au moins un autre élément de capteur dans la zone d'au moins une autre section optiquement transparente (116) .

7. Insert de stockage (100) selon l'une quelconque des revendications 1 à 6, dans lequel la barre de capteurs (114) est rigide ; et/ou
dans lequel la barre de capteurs (114) est réalisée en tant que carte de circuits imprimés imprimée avec des structures électriquement conductrices, dans lequel au moins un élément de capteur est monté sur et/ou dans la carte de circuits imprimés et est couplé de manière électrique aux structures électriquement conductrices.

8. Insert de stockage (100) selon l'une quelconque des revendications 1 à 7, dans lequel la barre de capteurs (114) présente un connecteur enfichable (124) relié de manière électrique à au moins un élément de capteur, en particulier pour transporter des signaux électriques et/ou de l'énergie d'alimentation électrique, destiné à être relié à un câble de raccordement (141).

9. Insert de stockage (100) selon l'une quelconque des revendications 1 à 8, dans lequel au moins un élément de capteur présente un élément émetteur (160) pour émettre un rayonnement primaire électromagnétique (164) et un élément détecteur (162) pour détecter un rayonnement secondaire électromagnétique (166) en réponse à une émission de rayonnement primaire électromagnétique (166) quand la section optiquement transparente (116) associée à l'élément de capteur est recouverte par des produits de stockage (106) sur le côté supérieur (104), dans lequel l'élément détecteur (162) est disposé de préférence pour ne détecter aucun rayonnement secondaire électromagnétique (166) ou pour détecter une petite quantité de rayonnement secondaire électromagnétique (166) en réponse à une émission de rayonnement primaire électromagnétique (166) quand la section optiquement transparente (116) associée à l'élément de capteur n'est pas recouverte par des produits de stockage (106) sur le côté supérieur (104).

10. Insert de stockage (100) selon l'une quelconque des revendications 1 à 9, dans lequel un conduit de câble (126) est formé sur le corps de stockage (102), en particulier sur une section d'extrémité, opposée à un utilisateur, du corps de stockage (102), dans lequel le corps de stockage (102) y compris les structures de réception (110) et le conduit de câble (126) est réalisé de préférence en tant que tôle de stockage estampée et cintrée.

11. Dispositif de stockage (150) présentant :
des structures de fixation (152), en particulier des poteaux de rayonnage, pour fixer au moins un insert de stockage (100) ;
au moins un insert de stockage (100) selon l'une quelconque des revendications 1 à 10, qui est fixé ou peut être fixé sur les structures de fixation (152).

12. Dispositif de stockage (150) selon la revendication 11,
qui est réalisé en tant que rayonnage de stockage ou armoire de stockage ; et/ou
dans lequel au moins un insert de stockage (100) est installé de telle manière sur les structures de fixation (152) que le côté supérieur (104) est incliné par rapport à l'horizontale, en particulier est incliné de manière descendante en direction d'un utilisateur ; et/ou
dans lequel est formé sur et/ou dans les structures de fixation (152) en particulier verticales, un conduit de câble (126), en particulier relié à un conduit de câble (126) sur au moins un insert de stockage (100) s'étendant en particulier de manière horizontale ; et/ou
dans lequel les structures de fixation (152) présentent des tiges de fixation en particulier creuses, en particulier avec un profil rectangulaire formé par ailleurs en partie à partir de deux profils en L correspondants ; et/ou
dans lequel au moins un insert de stockage (100) est équipé au moins en partie de produits de stockage (106), en particulier sous la forme de boîtes de stockage, de contenants de marchandises et/ou de produits en vrac.

13. Système de gestion de stockage (180) présentant :
une multitude de dispositifs de stockage (150) selon l'une quelconque des revendications 11 et 12 ;
un système de gestion (182) qui est mis au point pour gérer un inventaire de produits de stockage (106) sur les inserts de stockage (100) sur la base de signaux de capteur des éléments de capteur.

14. Système de gestion de stockage (180) selon la revendication 13,
dans lequel des produits de stockage (106) spécifiques sont associés dans le système de gestion (182) à chaque section optiquement transparente (116) dans chaque zone de réception (112) et à chaque élément de capteur associé d'une barre de capteurs (114) d'un insert de stockage (100) respectivement associé d'un dispositif de stockage (150) respectif et les produits de stockage (106) spécifiques respectifs sont gérés en fonction de signaux de capteur de l'élément de capteur associé, en particulier si besoin une commande ultérieure des produits de stockage (106) spécifiques respectifs est mise en œuvre ou déclenchée ; et/ou
dans lequel le système de gestion (182) est couplé de manière électrique aux barres de capteurs (114) des inserts de stockage (100) des dispositifs de stockage (150) au moyen de liaisons par câble ; et/ou
présentant un poste central de commande (184) qui est couplé de manière à pouvoir communiquer, en particulier de manière à pouvoir communiquer sans fil, à une multitude de systèmes de gestion (182) pour commander un inventaire de stockage.

15. Utilisation d'un insert de stockage (100) selon l'une quelconque des revendications 1 à 10 ou d'un dispositif de stockage (150) selon l'une quelconque des revendications 11 et 12 ou d'un système de gestion de stockage (180) selon l'une quelconque des revendications 13 et 14 pour gérer un inventaire de produits de stockage (106).
